# FASCICULE DE BREVET EUROPEEN

(11) **EP 4 294 713 B1**
(45) Date de publication et mention de la délivrance du brevet: **15.07.2026**
(21) Numéro de dépôt: 22706050.6
(22) Date de dépôt: 17.02.2022
(51) Int. Cl.: B63B 1/26, B63B 1/38, B63H 21/17

(54) **DISPOSITIF DE REDUCTION DE TRAINEE HYDRODYNAMIQUE**
VORRICHTUNG ZUR REDUZIERUNG DES HYDRODYNAMISCHEN STRÖMUNGSWIDERSTANDES
DEVICE FOR REDUCING HYDRODYNAMIC DRAG

(30) Priorité: 17.02.2021 FR 2101536
(43) Date de publication de la demande: 27.12.2023
(73) Titulaire: Neptech, 13100 Aix-en-Provence (FR)
(72) Inventeur: GOETZ, Tanguy, 75014 PARIS (FR); BIGOT, Corentin, 13080 Aix-en-Provence (FR); ROUSSET, Clément, 13090 Aix-en-Provence (FR)
(74) Mandataire: Oak & Fox
(86) Numéro de dépôt international: PCT/EP2022/053878
(87) Numéro de publication internationale: WO 2022/175360

(56) Documents cités:
- CN-A- 102 241 272
- CN-A- 105 438 398
- CN-A- 112 238 921
- JP-A- 2010 264 969
- US-A1- 2005 215 129

## Description

### Domaine de l'invention

Le domaine de l'invention concerne le domaine naval. Plus précisément, le domaine de l'invention concerne les dispositifs de réduction de la trainée hydrodynamique de navires. Le domaine de l'invention concerne donc le domaine de l'augmentation de l'efficacité énergétique des navires. Le domaine de l'invention concerne également le domaine des navires utilisant des piles à combustible afin de fournir l'énergie électrique alimentant les moteurs du véhicule.

### État de la technique

Force de trainée est une force s'opposant au déplacement d'un objet immergé dans un fluide. Cette force est appliquée sur l'objet en mouvement dans le fluide par frottement du fluide sur l'objet.

La réduction de la force de trainée hydrodynamique permet donc d'augmenter les performances d'un navire en limitant l'énergie consommée par celle-ci. Ainsi, un dispositif de réduction de la trainée hydrodynamique permet d'augmenter le rendement du véhicule.

Il est connu de l'état de la technique que l'utilisation d'une couche d'air statique ou d'un flux d'air au contact de la coque du navire permet de diminuer les forces de frottement exercées par l'eau sur la coque.

Il existe notamment dans l'état de l'art des navires qui comportent dans leur coque une cavité aménagée permettant la création d'un coussin d'air qui vient recouvrir une partie de la surface de la coque qui serait autrement au contact de l'eau. Un tel dispositif est notamment connu du document US 2003/159637 A1. Un tel dispositif permet une réduction effective de la trainée hydrodynamique du navire. Cependant, ce type de dispositif est inefficace lorsque la houle est trop forte, car les vagues viennent « casser » le coussin d'air formé sous le navire. De plus, il faut utiliser un compresseur capable de fournir la pression nécessaire à la formation et au maintien du coussin d'air sous le navire. Le fonctionnement du compresseur étant énergivore, le rendement énergétique d'un tel dispositif est insuffisant. De plus, la présence d'un compresseur augmente la masse du navire, ce qui participe à réduire l'efficacité énergétique de celui-ci.

Il est connu également d'utiliser des injecteurs situés sous la coque afin d'injecter de l'air directement au contact de celle-ci. Un tel dispositif est connu du document KR 2020 0011300 A1, qui divulgue un dispositif de diminution de la trainée hydrodynamique comprenant un injecteur placé sous la coque du navire. L'injecteur injecte une quantité d'air directement en contact avec la coque et l'eau, quantité d'air qui vient lubrifier la coque et réduire la force de trainée. Bien qu'efficace, un tel dispositif présente le désavantage de devoir utiliser de l'énergie pour le fonctionnement d'un compresseur utilisé pour injecter l'air. Une telle utilisation d'énergie fait drastiquement baisser le rendement d'un tel système. De plus, la présence d'un compresseur augmente la masse du navire, ce qui participe à réduire l'efficacité énergétique de celui-ci.

Il est également connu de l'état de la technique des navires utilisant une pile à combustible afin d'alimenter électriquement les moteurs de celui-ci. On connaît notamment des navires utilisant de l'hydrogène pour alimenter les piles à combustible et fournir de l'énergie électrique au moteur. Typiquement, une pile à combustible utilise la réaction chimique entre du dihydrogène fourni par un réservoir et du dioxygène se trouvant dans l'air ambiant pour fournir une quantité d'énergie électrique. Une pile à combustible rejette au cours de ce processus une quantité d'air chaud et humide dans l'environnement ambiant. La pile rejette également une quantité d'eau lors de la production d'énergie électrique. De tels navires présentent l'intérêt de fournir une motorisation limitant les émissions de gaz à effet de serre. US 2005/215129 A1, CN 112 238 921 A, JP 2010 264969 A et CN 105 438 398 A constituent d'autres documents pertinents de l'état de la technique.

L'invention vise donc à fournir un dispositif de réduction de trainée hydrodynamique permettant de surmonter les inconvénients des dispositifs existants.

### Résumé de l'invention

A cet effet, l'invention concerne un dispositif de réduction de trainée hydrodynamique d'un navire qui comporte :
▪ une coque comprenant au moins un premier moyen d'injection d'un fluide ;
▪ une pile à combustible ; et
▪ un moyen d'acheminement d'une première quantité d'air rejetée par la pile à combustible vers au moins le premier moyen d'injection, le premier moyen d'injection étant agencé pour injecter ladite première quantité d'air le long d'une surface de la coque destinée à être immergée.

Le dispositif de réduction de trainée hydrodynamique selon l'invention permet avantageusement de bénéficier de la limitation d'émission des gaz à effet de serre en proposant l'utilisation d'une pile à combustible. De même, grâce à l'utilisation des moyens d'injections, le dispositif injecte une quantité d'air sous la coque qui diminue la trainée hydrodynamique du navire.

Enfin, le dispositif selon l'invention permet de réutiliser l'air s'échappant de la pile à combustible afin de l'injecter sous la coque. Cette disposition est particulièrement avantageuse, car elle permet d'éviter l'utilisation d'un compresseur dédié à l'injection de l'air sous la coque. De ce fait, le dispositif selon l'invention permet d'augmenter fortement le rendement énergétique des systèmes de réduction de trainée existants, car l'on fait l'économie de l'énergie utilisée par le compresseur. Le fait de ne pas avoir de compresseur dédié permet également de diminuer la masse du navire. La réduction de la masse du navire permet également une réduction de la consommation énergétique de celui-ci et donc une augmentation du rendement énergétique de celui-ci.

Selon un mode de réalisation, le premier moyen d'injection comporte un élément d'étanchéité pour limiter ou empêcher la remontée d'une quantité d'eau vers le moyen d'acheminement. Cette disposition permet d'empêcher une remontée de l'eau dans le moyen d'acheminement et/ ou dans la pile à combustible.

Selon un mode de réalisation, la première quantité d'air est injectée par les moyens d'injection sous forme de bulles d'air, lesdites bulles d'air ayant de préférence un diamètre inférieur à 5 millimètres. Le bulles d'air représentent un moyen efficace pour réduire la trainée hydrodynamique. Le diamètre de 5 millimètres correspond à l'épaisseur de la couche limite aux abords de la coque, il représente donc une dimension pour laquelle la réduction de trainée est très efficace.

Selon un mode de réalisation la première quantité d'air est injectée par les moyens d'injection sous forme de bulles d'air, lesdites bulles d'air ayant de préférence un diamètre compris entre 0,4 millimètre et 1,3 millimètre. Ces valeurs de diamètre permettent une réduction efficace de la trainée hydrodynamique.

Selon un mode de réalisation, la coque comporte une aile d'eau destinée à être immergée et en ce que ladite aile d'eau comporte au moins un second moyen d'injection agencé pour injecter au moins une portion de la première quantité d'air. Cette disposition permet de réduire la trainée hydrodynamique sur un navire comportant une aile d'eau.

Selon un mode de réalisation, le second moyen d'injection de l'aile d'eau est agencé pour injecter la portion de la première quantité d'air le long d'une surface verticale de l'aile d'eau. Selon cette disposition, l'injection d'air sur les surfaces verticales permet de ne pas diminuer la portance de l'aile d'eau lorsque l'injection est effective.

Selon un mode de réalisation, la coque comporte une portion additionnelle formant un décrochement en amont du premier moyen d'injection, relativement au sens de déplacement du navire. Cette disposition permet de créer une dépression en aval de la partie additionnelle. Cette dépression permet d'aspirer l'air à travers le moyen d'injection pour l'injecter et réduire la trainée. Cette disposition permet également de créer localement un écoulement turbulent, ce qui renforce l'efficacité de l'ai injecté pour réduire la trainée hydrodynamique.

Selon un mode de réalisation, le dispositif comporte un dispositif de contrôle commande du débit d'air dans le moyen d'acheminement. Cette disposition permet de contrôler le débit d'air injecté pour optimiser la réduction de la trainée hydrodynamique.

Selon un mode de réalisation, le moyen d'acheminement comporte au moins un capteur de débit d'air. Cette disposition permet de connaître le débit d'air dans le moyen d'acheminement. Elle permet également d'ajuster ce débit en prenant en compte sa valeur mesurée. Dans le cas où le dispositif selon l'invention comporte un dispositif de contrôle commande, l'information de débit permet fournir au dispositif de contrôle commande l'information de débit lui permettant de contrôler plus efficacement ledit débit.

Selon un mode de réalisation, le dispositif comprend un moyen de récupération d'une seconde quantité d'air issue du vent apparent du véhicule, ledit moyen de récupération étant apte à acheminer la seconde quantité d'air vers le moyen d'acheminement. Cette disposition permet de compléter le débit d'air acheminé jusqu'au moyens d'injection avec du vent apparent.

Selon un aspect, l'invention concerne également un procédé de réduction de la trainée hydrodynamique d'un navire qui comporte les étapes de :
- acheminement d'une première quantité d'air rejetée par une pile à combustible par un moyen d'acheminement vers un moyen d'injection compris par une coque ;
- injection de la première quantité d'air par le moyen d'injection le long d'une surface de la coque destinée à être immergée.

Le procédé selon l'invention permet avantageusement de bénéficier de la limitation d'émission des gaz à effet de serre en proposant l'utilisation d'une pile à combustible. De même, grâce à l'utilisation des moyens d'injections, la quantité d'air injectée sous la coque diminue la trainée hydrodynamique du navire.

Enfin, le procédé selon l'invention permet de réutiliser l'air s'échappant de la pile à combustible afin de l'injecter sous la coque. Cette disposition est particulièrement avantageuse, car elle permet d'éviter l'utilisation d'un compresseur dédié à l'injection de l'air sous la coque. De ce fait, le procédé selon l'invention permet d'augmenter fortement le rendement énergétique des systèmes de réduction de trainée existants, car l'on fait l'économie de l'énergie utilisée par le compresseur. Le fait de ne pas avoir de compresseur dédié permet également de diminuer la masse du navire. La réduction de la masse du navire permet également une réduction de la consommation énergétique de celui-ci et donc une augmentation du rendement énergétique de celui-ci.

### Brève description des figures

D'autres caractéristiques et avantages de l'invention ressortiront à la lecture de la description détaillée qui suit, en référence aux figures annexées, qui illustrent :
Fig. 1 : une vue schématique de profil d'un navire comportant un dispositif de réduction de trainée selon un premier mode de réalisation de l'invention.
Fig. 2 : une vue schématique de profil d'un navire comportant un dispositif de réduction de trainée selon un second mode de réalisation de l'invention.
Fig. 3 : une vue schématique en coupe partielle d'une coque d'un navire comportant un dispositif de réduction de trainée selon un troisième mode de réalisation de l'invention.
Fig. 4 : une vue en coupe d'une coque de navire selon un quatrième mode de réalisation de l'invention.

### Description de l'invention

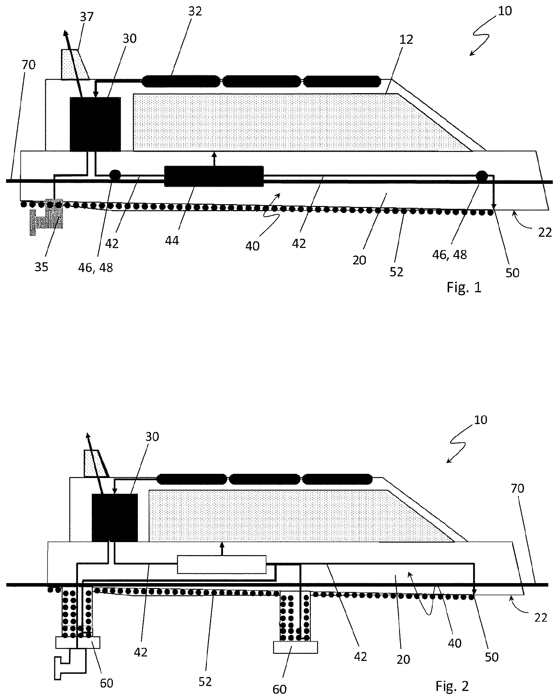

La figure 1 représente un premier mode de réalisation de l'invention. Cette figure est une vue schématique en coupe d'un navire 10 comprenant un dispositif de réduction de trainée hydrodynamique selon l'invention. Par navire 10, on entend dans cette demande tout type de véhicule flottant. L'invention concerne donc à la fois des véhicules marins tels que des bateaux et des barges par exemple. Tout type d'engin flottant entre dans le cadre de l'invention. Les engins flottant et/ou submersibles entrent aussi dans le cadre de l'invention. Plus loin dans cette description, les termes navire 10 et de bateau 10 seront utilisés indifféremment.

Toutes les caractéristiques du dispositif de réduction de trainée hydrodynamique selon l'invention pourront s'appliquer également au procédé de réduction de trainée hydrodynamique selon l'invention.

Le navire 10 comporte une coque 20. La coque 20 est l'enveloppe extérieure du navire 10 qui est en contact avec l'eau sur laquelle le navire 10 flotte et/ou est immergé.

Le navire de la figure 1 comporte une pile à combustible 30. La pile à combustible 30 utilise de l'hydrogène pour produire de l'énergie électrique. Cette énergie électrique est utilisée pour alimenter le navire en énergie. L'énergie produite par la pile à combustible peut être utilisée pour alimenter un moteur électrique 30. Le moteur électrique 30 sert à propulser le navire 10. De manière alternative ou additionnelle, la pile à combustible 30 alimente en énergie électrique des systèmes de bord tels que des systèmes d'éclairage, de chauffage ou autres systèmes. L'invention concerne également des piles à combustibles qui n'utilise pas d'hydrogène. On peut donc avoir une pile à combustible fonctionnant avec du méthanol réformé ou du méthanol direct. On peut également prévoir une pile à combustible fonctionnant à l'hydrure de bore direct, à l'acide formique, à l'acide phosphorique, au carbonate fondu ou à la céramique protonante. Tous les types de chimie des piles à combustible peuvent être envisagées.

Par pile à combustible 30, on entend l'ensemble système pile à combustible. Ainsi, on parle à la fois du cœur de la pile à combustible, soit un dispositif électrochimique qui produit de l'électricité en convertissant l'énergie chimique en énergie électrique grâce à une réaction chimique d'oxydoréduction, dans laquelle la génération d'une tension électrique se fait grâce à l'oxydation d'un combustible réducteur couplée à la réduction sur l'autre électrode d'un oxydant, tel que l'oxygène de l'air, et à la fois des systèmes auxiliaires de ladite pile à combustible, à savoir entre autres l'électronique de gestion de la pile et un compresseur chargé d'alimenter le cœur de la pile à combustible en air pour lui apporter de l'oxygène.

La pile à combustible 30 utilise une réaction chimique entre du dihydrogène et du dioxygène pris dans l'air ambiant pour produire de l'énergie électrique. Le fonctionnement de la pile à combustible 30 produit un dégagement d'air qui est habituellement relâché dans le milieu ambiant pour les bateaux à propulsion hydrogène. Dans le cas d'une pile à combustible n'étant pas alimentée avec de l'hydrogène, telle que les piles à combustible décrites plus haut, la pile à combustible rejette également de l'air en fonctionnant. Les caractéristiques décrites avant et après s'appliquent donc aussi aux piles à combustible autres que les piles à combustible à hydrogène.

Dans le cadre de l'invention, le dispositif de réduction de trainée hydrodynamique 40 comporte un moyen d'acheminement d'air 42. Le moyen d'acheminement de l'air 42 est aménagé en sortie de la pile à combustible 30. Ce moyen d'acheminement 42 recueille les gaz s'échappant de la pile à combustible 30 lors de son fonctionnement normal. Le moyen d'acheminement 42 est directement connecté à une sortie d'échappement de la pile à combustible 30.

Le moyen d'acheminement de l'air 42 est connecté à un moyen d'injection 50. Le moyen d'injection 50 est intégré à la coque 20. Le moyen d'injection 50 est configuré pour injecter l'air acheminé par le moyen d'acheminement 42. Pour ce faire, il injecte une quantité d'air 52 à proximité de la coque 20, en regard d'une surface la coque 20 qui est destinée à être immergée lorsque le bateau 10 navigue. Le moyen d'injection 50 est donc situé sous une ligne de flottaison du navire 10. Plus précisément, le moyen d'injection 50 injecte l'air 52 à proximité d'une surface 22 de la coque 20 destinée à être immergée.

Décrivons maintenant le fonctionnement du système de réduction de trainée hydrodynamique 40.

Lorsque le navire 10 est en fonctionnement, la pile à combustible 30 produit de l'énergie électrique pour celui-ci. Lorsque celle-ci produit de l'énergie électrique, elle dégage une première quantité d'air. Cette première quantité d'air est l'échappement de la pile à combustible 30. La première quantité d'air est recueillie par le moyen d'acheminement 42. Le moyen d'acheminement 42 achemine la première quantité d'air vers le moyen d'injection 50. Ce moyen d'injection est situé sous la coque 20 du navire 10. Le moyen d'injection 50 injecte la première quantité d'air 52 en regard de la surface 22 de la coque 20 qui est destinée à être immergée. On le rappelle, par surface 22 de la coque 20 destinée à être immergée, on entend une surface 22 de la coque 20 placée sous la ligne de flottaison du navire 10.

Le dispositif de réduction de trainée hydrodynamique comprend donc la pile à combustible 30, le moyen d'acheminement 42, la coque 20 et le moyen d'injection 50.

Le dispositif de réduction de la trainée hydrodynamique selon l'invention permet donc de réutiliser l'air émanant de la pile à combustible lorsque celle-ci est en train de produire de l'énergie électrique. Par air émanant de la pile à combustible, on entend l'air produit lors de la réaction chimique se déroulant en son sein.

La réutilisation de la première quantité d'air, qui est acheminée vers le moyen d'injection 50, permet d'injection ladite quantité d'air à proximité de la coque 20. Cet air injection permet une « lubrification » de la coque 20 qui diminue la force de trainée hydrodynamique que l'eau applique sur la coque 20. Le dispositif 40 selon l'invention permet donc une réduction de trainée hydrodynamique qui permet une réduction de la consommation énergétique du navire 10. De plus, l'air étant issu directement de la pile à combustible, le dispositif 40 est donc dépourvu d'un moyen externe de mise sous pression de l'air pour effectuer l'injection. Ainsi, le dispositif 20 selon l'invention permet d'augmenter grandement le rendement disponible avec les dispositifs de l'art antérieur, car il ne consomme pas d'énergie pour injecter l'air, celui-ci étant un sous-produit de la production d'énergie électrique de la pile à combustible 30. De plus, le dispositif de réduction de trainée selon l'invention permet de réduire la masse du navire 10 car un compresseur est un dispositif lourd. La réduction de masse permet aussi d'augmenter l'efficacité énergétique du navire 10. De manière alternative, le dispositif de réduction de trainée 40 peut comporter un compresseur additionnel. Le compresseur additionnel complète le débit d'air dans le moyen d'acheminement 42. De cette manière, si le débit et/ ou la pression d'air fournis par la pile à combustible 30 sont insuffisant, alors le compresseur additionnel fourni le débit et/ou la pression nécessaire. Malgré la présence du compresseur additionnel, le dispositif de réduction de trainée 40 permet tout de même d'améliorer le rendement énergétique par rapport à un dispositif de réduction de trainée classique car le compresseur additionnel nécessaire comporte une puissance et une masse plus faibles que celles du compresseur utilisé dans les dispositifs de l'art antérieur.

Le navire 10 peut comporter un réservoir à hydrogène 32. Dans l'exemple représenté en figure 1, le navire 10 comporte trois réservoirs d'hydrogène 32. Ces réservoirs 32 sont placés sur le toit du bateau 10. Les réservoirs à hydrogène 32 sont un moyen efficace pour stocker le dihydrogène, sous forme gazeuse et/ ou liquide, qui sera utilisé par la pile à combustible 30 pour son fonctionnement. Dans le cadre d'une pile à combustible fonctionnant autrement qu'avec de l'hydrogène, le réservoir 32 peut être utilisé pour stocker un autre gaz que du dihydrogène.

Le navire 10 peut avantageusement être un catamaran. Par catamaran on entend un navire comportant deux coques ou flotteurs. C'est notamment le cas pour les navires 10 présentés dans les figures de cette demande, où la partie de la coque 20 représentée est un des deux flotteurs que comporte ladite coque 20. Toutefois, l'invention concerne également les navires monocoques, ou les multi-coques. Ainsi, toutes les caractéristiques du dispositif de réduction de trainée 40 selon l'invention présentées dans cette demande s'appliquent indifféremment à des navires monocoques, des catamarans, des multicoques ou tout autre type de navire.

Le navire 10 peut comporter une cheminée d'échappement 37. La cheminée d'échappement permet d'évacuer une surpression de gaz qui se serait formée dans la pile à combustible 30. Cette cheminée 37 est liée à la pile à combustible et est utilisée en cas de surpression de la pile à combustible 30. La cheminée d'échappement 37 est également utilisée en cas de surpression dans les systèmes de auxiliaires de la pile à combustible 30, tels que les systèmes de distribution ou les réservoirs par exemple.

Selon un aspect, la pile à combustible 30 alimente électriquement un moteur électrique 35. Ce moteur électrique 35 permet la propulsion du navire 10.

Selon un aspect, la pile à combustible 30 alimente électriquement une ou plusieurs batteries électriques qu'elle charge. Selon cet aspect, ce sont les batteries électriques qui alimentent électriquement le moteur électrique 35.

Selon un aspect, le navire 10 est un navire de transport de passagers. Selon cette caractéristique, les passagers sont transportés dans une cabine 12 du navire 10. De manière alternative ou additionnelle, le navire 10 est un navire dédié à un autre usage, par exemple le transport de charges, la pêche, la plaisance, les applications militaires. Cette liste des usages pour le bateau 10 n'est pas exhaustive.

### Acheminement de la première quantité d'air

Selon un aspect, le moyen d'acheminement de l'air rejeté par la pile à combustible 30 est un conduit. Par conduit, on entend tout type de moyen tel qu'un tuyau ou un ensemble de tuyaux liés entre eux. De manière alternative ou additionnelle, le moyen d'acheminement 42 est un tube, de préférence un tube flexible. Le moyen d'acheminement 42 peut aussi être un ensemble de tubes reliés entre eux. On peut par exemple prévoir un moyen d'acheminement comportant un tube rigide et un tube flexible placés en série.

Selon un aspect, le moyen d'acheminement 42 comporte sur son passage un échangeur thermique 44. L'échangeur thermique 44 récupère de la chaleur de la première quantité d'air rejetée par la pile à combustible 30. On peut noter que l'air rejeté par la pile à combustible 30 est chaud. Avantageusement, la chaleur récupérée par l'échangeur thermique 30 est utilisée pour chauffer la cabine 12 du navire 10.

Selon un aspect, le dispositif de réduction de trainée hydrodynamique comporte un dispositif de contrôle commande du débit de l'air acheminé par le moyen d'acheminement 42. Selon cet aspect, le dispositif de contrôle commande permet de contrôler le débit passant par le moyen d'acheminement 42. Cette disposition permet de contrôler un débit d'air sortant de la pile à combustible 30. Cette disposition permet également de contrôler le débit d'air injecté par le moyen d'injection 50. Ainsi, on peut contrôler le débit d'air injecté pour optimiser la lubrification de la coque 20 par l'air. Selon un aspect, le moyen d'acheminent 42 comporte un échappement (non représenté sur les figures) qui permet de relâcher un surplus de débit d'air. De cette manière, si le débit d'air sortant de la pile à combustible 30 est plus important que celui souhaité pour la lubrification, il est possible de relâcher une partie de ce débit dans l'air environnant ou dans l'eau environnante pour adapter le débit relâché par le moyen d'injection 50.

Selon un aspect, le dispositif contrôle commande contrôle également le fonctionnement de la pile à combustible 30. Il peut par exemple contrôler la puissance produite par la pile à combustible 30, ainsi que son alimentation en réactifs tels que l'hydrogène. Le dispositif de contrôle commande peut également être utilisé pour contrôler d'autres éléments du navire 10 en plus du dispositif de réduction de trainée 10.

Selon un aspect, le dispositif de réduction de trainée hydrodynamique 10 comporte au moins un capteur de débit 46. Le capteur de débit 46 mesure un débit d'air. Le capteur de débit 46 peut être placé en sortie de la pile à combustible 30. Le capteur de débit peut par exemple être compris par le moyen d'acheminement de l'air 42. Il peut par exemple être placé pour mesurer le débit d'air dans le moyen d'acheminement 42 en sortie de la pile à combustible 30. On peut également prévoir un capteur de débit 46 en sortie du moyen d'acheminement 42, avant le moyen d'injection 50. Selon un aspect, le dispositif 10 comporte plusieurs capteurs de débits 46. Ces capteurs peuvent par exemple être placés en entrée et en sortie du moyen d'acheminement 42.

Selon un aspect, le dispositif de réduction de trainée hydrodynamique 10 comporte au moins un capteur de pression 48. Le capteur de pression 48 mesure la pression de l'air. Le capteur de pression 48 peut être placé en sortie de la pile à combustible 30. Le capteur de pression 48 peut par exemple être compris par le moyen d'acheminement de l'air 42. Il peut par exemple être placé pour mesurer la pression d'air dans le moyen d'acheminement 42 en sortie de la pile à combustible 30. On peut également prévoir un capteur de pression 48 en sortie du moyen d'acheminement 42, avant le moyen d'injection 50. Selon un aspect, le dispositif 10 comporte plusieurs capteurs de pression 48. Ces capteurs de pression 48 peuvent par exemple être placés en entrée et en sortie du moyen d'acheminement 42.

Selon un aspect, le moyen d'acheminement 42 comporte au moins un capteur de pression 48 et au moins un capteur de débit 46. Selon le mode de réalisation représenté en figure 1, le moyen d'acheminement 42 comporte un capteur de débit 46 et un capteur de pression 48 en sortie de la pile à combustible 30. Selon ce mode de réalisation, le moyen d'acheminement 42 comporte également un capteur de débit 46 et un capteur de pression 48 en sortie du moyen d'acheminement 42, en amont du moyen d'injection 50.

Selon un aspect de l'invention, le dispositif de réduction de la trainée hydrodynamique 40 comporte un système de contrôle commande du débit d'air. Selon cet aspect, le dispositif 40 comporte au moins un capteur de pression 48 et un capteur de débit 46. Selon cet aspect, le dispositif 40 comporte également au moins un échappement tel que décrit plus haut. Selon cet aspect, le dispositif de contrôle commande peut ouvrir l'échappement en fonction des informations de pression et/ou de débit transmises par les capteurs 46, 48. Cette disposition permet une ouverture automatique du circuit en cas de surpression par exemple.

Selon un aspect, le dispositif de réduction de trainée 40 comporte un calculateur. Le calculateur est configuré pour commander l'ouverture de l'échappement en fonction des données de pression du ou des capteurs de pression 48. Le calculateur peut également commander l'ouverture de l'échappement en fonction des données de débit des capteurs de débit 46.

### Captation du vent apparent

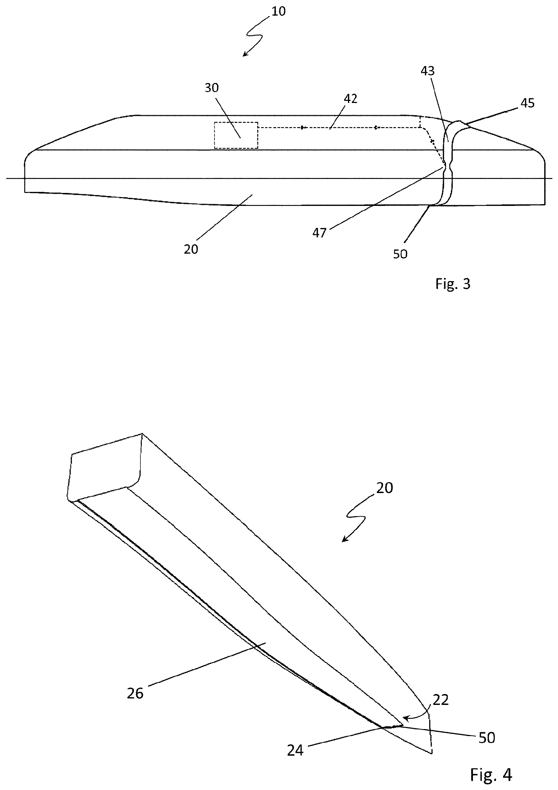

Selon un mode de réalisation présenté à la figure 3, le dispositif de réduction de trainée 40 comporte un moyen de récupération 43 d'air issu du vent apparent du navire 10. Par vent apparent, on entend le vent ressenti à bord du navire 10 lorsque celui-ci se déplace. Le vent apparent est la composition du vent réel et du vent relatif crée par le déplacement du navire 10.

Le moyen de récupération du vent apparent 43 est situé sur le navire 10 à un niveau qui est au-dessus de la ligne de flottaison dudit navire 10. Ainsi, le moyen de récupération 43 récupère le vent apparent et non de l'eau.

Le moyen de récupération 43 achemine une seconde quantité d'air vers le moyen d'acheminement 42. De cette manière, la seconde quantité d'air s'ajoute à la première quantité d'air issue de la pile à combustible 30. Ainsi, on peut augmenter le débit d'air acheminé vers le ou les moyens d'injection 50. De même, si la pile à combustible 30 ne fournit pas assez d'air pour assurer une réduction de trainée suffisante, on peut ajouter la seconde quantité d'air pour injecter suffisamment d'air.

Selon un aspect, le moyen de récupération 43 comporte une ouverture 45 par laquelle le vent apparent est recueilli. Cette ouverture 45 peut être une ouïe donnant sur l'air extérieur.

Selon un aspect, le moyen de récupération 43 comprend un tube ou un tuyau. Ce tube ou ce tuyau peut être rigide ou flexible. Il relie l'ouverture 45 ou l'ouïe du moyen de récupération 43 au moyen d'acheminement 42.

Selon un aspect, le moyen de récupération 43 est lié au moyen d'acheminement 42 au niveau d'une jonction 47.

Selon un aspect, le moyen de récupération 43 comprend une réduction de section 49. Selon cette disposition le tube ou le tuyau du moyen de récupération 43 comprend une section normale. La section normale est sensiblement constante le long du tube ou du tuyau. Au niveau de la réduction de section 49, celle-ci se rétrécit. Cette disposition permet, par effet venturi, d'accélérer l'écoulement de l'air dans le moyen de récupération 43.

Selon un aspect, la jonction 47 entre le moyen d'acheminement 42 et le moyen de récupération 43 est située au niveau de la réduction de section 49 du moyen de récupération 43. Cette disposition est visible en figure 3. Cette disposition permet une accélération de l'écoulement de la première quantité d'air issue du moyen d'acheminement 42, par effet venturi.

Selon un aspect, la jonction 47 est située au niveau de la réduction de section 41 du moyen d'acheminement. Cette disposition permet une accélération de l'écoulement de la seconde quantité d'air issue du moyen de récupération 43, par effet venturi.

Selon un mode de réalisation, le moyen de récupération 43 comprend au moins un capteur de pression (non représenté). Le capteur de pression permet de mesurer la pression de l'air dans le moyen de récupération 43.

Selon un mode de réalisation, le moyen de récupération 43 comprend au moins un capteur de débit (non représenté). Le capteur de débit permet de mesurer le débit d'air dans le moyen de récupération 43.

Selon un aspect, le capteur de débit du moyen de récupération 43 et/ou le capteur de pression du moyen de récupération 43 sont connectés au système de contrôle commande. Ce système peut contrôler l'ouverture ou la fermeture du moyen de récupération 43 pour contrôler le débit d'air arrivant de celui-ci dans le moyen d'acheminement 42.

Toutes les dispositions décrites ici concernant le moyen de récupération du vent apparent 43 sont compatibles avec les caractéristiques décrites dans les autres modes de réalisation.

### Injection de l'air

Comme dit précédemment, le dispositif de réduction de trainée 40 comporte au moins un moyen d'injection 50 de l'air.

Par moyen d'injection 50, on entend par exemple un injecteur 50. Le moyen d'injection peut également être une ouverture du moyen d'acheminement 42 au niveau de la coque 20 du navire 10.

Selon une disposition, la coque 20 comporte une pluralité de moyens d'injection 50, en plus du moyen d'injection 50 représenté sur la figure 1. Par exemple, la coque 50 peut comporter deux moyens d'injection 50, l'un situé légèrement à bâbord, relativement à un axe longitudinal de la coque du navire 10, et un autre à tribord. De cette manière, les parties immergées de la coque 50 sont lubrifiées par l'air injecté sur toute la largeur de la coque 50. On peut également prévoir plusieurs moyens d'injection 50 sur un axe allant de la proue à la poupe du navire 10. Selon un aspect, la pluralité de moyens d'injection 50 recouvre une grande partie de la surface 22 destinée à être immergée de la coque 20. Lorsque le système de réduction de trainée 40 comporte plusieurs moyens d'injection 50, le moyen d'acheminement 42 comporte plusieurs ramifications pour alimenter en air tous les moyens d'injection 50.

On peut également prévoir une pluralité de moyens d'injection 50 placés le long de la surface 22 de la coque 20 destinée à être immergée. Par exemple, on peut avoir une pluralité de moyens d'injection 50 alignés suivant deux lignes formant à elles deux un « V » sous la coque 20. La pointe du « V » peut pointer soit vers la proue du navire 10, soit vers la poupe de celui-ci. On peut également prévoir plusieurs moyens d'injection 50 agencés selon une ligne de la coque 20 perpendiculaire à l'axe longitudinal du navire 10. On peut également prévoir plusieurs lignes de moyens d'injection 50 le long de la coque 20. On peut par exemple prévoir deux lignes parallèles comportant chacune une pluralité de moyens d'injection 50, les deux lignes étant perpendiculaires à l'axe longitudinal du navire 10. Le nombre de moyens d'injection 50 le long de chaque ligne peut varier d'une ligne à l'autre. On peut par exemple avoir dix moyens d'injection 50 par ligne. On peut également avoir une ligne avec dix moyens d'injection 50, et une autre ligne avec 5 moyens d'injection 50.

Le nombre et la répartition des moyens d'injection 50 reste à la discrétion de l'homme du métier, afin de maximiser l'efficacité de la réduction de la trainée hydrodynamique.

Selon un mode de réalisation, la surface destinée à être immergée 22 de la coque 20 comporte un fond sensiblement plat. Selon cette disposition, le fond plat permet de garder le flux d'air injecté sous la coque. De cette manière, l'air ne remonte pas à la surface de l'eau par les côtés de la coque 20. Ainsi, le flux d'air injecté recouvre une surface plus grande au lieu de s'échapper sur les bords. De cette manière, une plus grande partie de la surface destinée à être immergée 22 est recouverte par le flux d'air. La lubrification de la coque 20 est donc plus efficace.

Selon un aspect, le moyen d'injection 50 comporte un moyen anti-retour. Le moyen anti-retour est un dispositif empêchant la remontée de l'eau depuis l'extérieur du navire 10 par le moyen d'acheminement 42. Cette disposition permet d'empêcher une remontée de l'eau vers l'intérieur du navire, et en particulier vers la pile à combustible 30.

Selon un aspect, le moyen anti-retour est un clapet anti-retour. De manière alternative, le moyen anti-retour est une vanne, de préférence une électrovanne commandée par le système de contrôle commande.

Selon un aspect, le moyen d'injection 50 ne comporte pas de moyen anti-retour. Selon cette variante, l'eau extérieure peut pénétrer dans le moyen d'acheminement 42. Lorsque l'air n'est pas injecté, l'eau remonte donc dans le moyen d'acheminement 42 jusqu'à la ligne de flottaison du navire 10. Lorsque le dispositif de réduction de trainée 40 est mis en marche, l'air injecté chasse l'eau du moyen d'acheminement 42.

Selon un aspect, l'air injecté par le ou les moyens d'injection 50 est injecté sous forme de bulles d'air. Les bulles d'air sont un moyen très efficace de lubrification par air de la coque 20.

Selon un aspect, les bulles d'air injectées ont un diamètre compris entre 0,1 millimètre et 100 millimètres. Selon un aspect, les bulles d'air injectées ont un diamètre compris entre 0,2 millimètres et 20 millimètres.

Selon un aspect, les bulles d'air ont un diamètre inférieur à 5 millimètres. Selon cette disposition, les bulles d'air ont donc un diamètre qui est inférieur à 5 millimètres, distance correspondant à l'épaisseur de la couche limite d'écoulement du fluide aux abords de la coque 20.

Selon un aspect, les bulles d'air injectées ont un diamètre moyen compris entre 0,4 millimètre et 1,3 millimètre. Des bulles dans cette gamme de diamètres ont une grande efficacité pour diminuer la trainée hydrodynamique.

Selon un mode de réalisation, les bulles injectées forment une nappe d'air sous la coque du navire. Selon un mode de réalisation, les bulles d'air sont injectées à un débit suffisant pour que celles-ci fusionnent après leur sortie du moyen d'injection. Une telle disposition permet de former une nappe d'air sous la coque, nappe qui permet de très fortement diminuer les frottements sur ladite coque. De ce fait, la trainée hydrodynamique est très fortement diminuée.

Selon un mode de réalisation, les bulles d'air forment une couche mixte sous la coque. Par couche mixte on entend une couche comprenant des parties dans laquelle elle est sous forme de nappe et des parties dans lesquelles elle est sous forme de bulles. Cette disposition permet de réduire les frottements sur la coque du navire tout en nécessitant un débit d'air injecté moins important que dans le cas d'une nappe.

Selon un aspect, le moyen d'injection 50 comporte une buse adaptable. Selon cet aspect, la buse a une forme qui est adaptable pour adapter l'injection de l'air. Selon un aspect, le diamètre de la buse est adaptable. Selon cet aspect, le diamètre de la buse s'adapte pour contrôler la taille des bulles d'air injectées. Selon un aspect, l'adaptation de la buse est contrôlée par le dispositif de contrôle commande. De cette manière, le dispositif de contrôle commande peut contrôler l'injection de l'air. De manière préférée, le dispositif de contrôle commande contrôle le diamètre de la buse. Ainsi, le diamètre des bulles d'air est contrôlé directement par le dispositif de contrôle commande.

### Ailes d'eau

Selon un mode de réalisation, la coque 20 comporte au moins une aile d'eau 60. La coque peut comporter additionnellement une, deux, trois, quatre ou plus ailes d'eau 60 additionnelles. Une aile d'eau 60 est une pièce de la coque 20 comportant un profil hydrodynamique permettant de surélever le navire 10 lorsque celui-ci est en mouvement. Ce type de dispositif est également souvent appelé « hydrofoil » ou « foil ».

La surélévation du navire 10 lors de son déplacement permet de diminuer la surface et le volume du navire qui est dans l'eau. Ainsi, ce type de dispositif permet de diminuer les forces s'opposant au mouvement du navire 10 par l'eau environnante.

La figure 2 illustre le cas d'une coque 20 comportant deux ailes d'eau 60. La figure 2 représente également une ligne de flottaison 70 du navire. Cette ligne de flottaison 70 se situe plus bas sur la coque 30 que la ligne de flottaison du navire 10 à l'arrêt, sous l'effet de l'aile d'eau 60. Ainsi, lorsque le bateau 10 est en mouvement et à sa ligne de flottaison au niveau de la ligne de flottaison en mode archimédien 70, les forces de l'eau s'opposant à son mouvement sont plus faibles que sans aile d'eau 60.

Selon un aspect, l'aile d'eau 60 comporte au moins un moyen d'injection 50 de l'air acheminé par le moyen d'acheminement 42. Le moyen d'injection 50 de l'aile d'eau 60 permet de lubrifier la surface de l'aile d'eau 60. Cette disposition permet d'augmenter l'efficacité du dispositif de réduction de trainée 40 en réduisant la trainée hydrodynamique subie par l'aile d'eau 60. Lorsque la coque 20 comporte plusieurs ailes d'eau 60, chacune d'entre elles peut comporter au moins un moyen d'injection 50.

Selon un aspect, le ou les moyens d'injection 50 de la ou les ailes d'eau 60 sont situés uniquement sur des parties verticales de l'aile d'eau. Selon cette disposition, l'air injecté au voisinage de l'aile d'eau 60 ne concerne pas le voisinage de partie horizontale de celle-ci. Les parties horizontales de l'aile d'eau sont responsables de la portance de ladite aile d'eau 60. En d'autres termes, ce sont les parties horizontales de l'aile d'eau 60 qui permettent de surélever le navire 10 lorsque celui-ci est en mouvement. Ne pas lubrifier ces parties avec de l'air injecter permet de ne pas diminuer la portance impliquée par lesdites ailes d'eau 60. Ainsi, on ne limite l'effet de surélévation des ailes d'eau 60.

Selon un aspect, le système de contrôle commande permet d'arrêter l'injection d'air au niveau d'un ou plusieurs moyens d'injection 50.

Selon un aspect, le système de contrôle commande peut contrôler la fermeture de vannes du moyen d'acheminement 42. Ainsi, le système de contrôle commande peut arrêter l'injection d'air dans les moyens d'injection 50 désirés.

### Aménagement de la coque

Selon un aspect de l'invention, la coque 20 comporte un décrochement 24. Ce décrochement 24 est visible sur la figure 3. Le décrochement 24 est une marche dans la coque 24 comportant une surface qui est verticale lorsque le navire 10 est sur l'eau. La surface verticale du décrochement 24 est orientée sur un côté libre en direction de l'arrière du navire 10.

Selon un aspect, le ou les moyens d'injection 50 sont placés sur la surface verticale du décrochement 24. De cette manière, les moyens d'injection 50 injectent l'air dans l'eau suivant une direction allant de l'avant vers l'arrière du bateau 10. Le décrochement 24 permet avantageusement, lorsque le bateau 10 est en mouvement, de créer une dépression d'eau derrière ledit décrochement 24. Cette dépression aspire l'air du moyen d'acheminement 42 par le moyen d'injection 50. Cette disposition permet donc de faciliter l'injection de l'air. De plus, le décrochement 24 permet de rendre l'écoulement de l'eau à proximité du décrochement 24 turbulent. Créer un écoulement turbulent à proximité et derrière le décrochement 24 permet de faire osciller les bulles d'air injectées long de la coque 30. L'oscillation des bulles d'air injectées permet d'augmenter l'efficacité de la lubrification et donc l'efficacité du dispositif de réduction de trainée 40.

Selon un aspect, la coque 20 comporte un renfoncement 26. Le renfoncement 26 est une partie de la coque 20 qui est enfoncée vers l'intérieur de la coque 26. Avantageusement, le renfoncement 26 comprend le décrochement 24. Il est également formé d'au moins deux autres décrochements latéraux. Le renfoncement 26 forme une cavité dans la surface 22 de la coque 20 qui retient l'air injecté au contact de la coque 20, l'empêchant de remonter sur les côtés de la coque 20. De cette manière, l'air injecté suit la coque sur tout son long. Ainsi, l'arrière de la coque 20 est bien lubrifié par l'air injecté. Le renfoncement 26 forme donc un canal pour l'air injecté.

Selon une disposition, la coque 20 comporte au moins une réglette disposée sur sa surface 22. Par réglette, on entend une forme de boudin faisant saillie de la coque 20. La saillie est de préférence d'une faible hauteur, permettant ainsi de rendre l'écoulement de l'eau en aval de la réglette turbulent. En d'autres termes, la réglette a une forme de boudin ou de demi-boudin agencé sur la coque 20. On peut aussi prévoir une ou plusieurs réglettes ayant une forme de demi-cylindre. La réglette a de préférence une forme carénée. Par forme carénée, on entend une forme qui n'oppose que peu de résistance à l'écoulement d'un fluide avoisinant la forme. De préférence, cette réglette est située directement en amont d'un ou des moyens d'injection 50. Cette réglette peut également être située directement en aval du ou des moyens d'injection 50. La réglette permet avantageusement de rendre l'écoulement de l'eau turbulent au passage de ladite réglette. Cette disposition rend donc plus efficace la lubrification par l'air injecté. De manière additionnelle, la coque 20 peut comporter une pluralité de réglettes qui sont situées en amont et en aval de chaque moyen d'injection 50. On peut également prévoir des réglettes en aval de moyens d'injection 50, mais situées plus loin de ceux-ci. Ces réglettes peuvent empêcher l'écoulement au contact de la coque de devenir laminaire, dans le but de conserver un écoulement turbulent au contact de la coque tout le long du passage de l'air injecté.

### Nomenclature :

10 : Navire
12 : Cabine
20 : Coque
22 : Surface de la coque destinée à être immergée
24 : Décrochement de la coque
26 : Renfoncement de la coque
30 : Pile à combustible
32 : Réservoir d'hydrogène
35 : Moteur
37 : Cheminée d'échappement
40 : Dispositif de réduction de trainée hydrodynamique
42 : Moyen d'acheminement de l'air rejeté par la pile
43 : Moyen de récupération du vent apparent
44 : Echangeur thermique
45 : Ouverture du moyen de récupération du vent apparent
46 : Capteur de débit d'air
47 : Jonction
48 : Capteur de pression
49 : Réduction de section du moyen de récupération du vent apparent
50 : Moyen d'injection de la première quantité d'air
52 : Air injecté par le moyen d'injection
60 : Aile d'eau
70 : Ligne de flottaison

## Revendications

1. Dispositif de réduction de trainée hydrodynamique (40) d'un navire (10) comportant:
▪ Une coque (20) comprenant au moins un premier moyen d'injection (50) d'un fluide ;
▪ Une pile à combustible (30) apte à générer une tension électrique grâce à l'oxydation d'un combustible réducteur couplée à la réduction sur une autre électrode d'un oxydant ; et
▪ Un moyen d'acheminement (42) d'une première quantité d'air rejetée par la pile à combustible (30) vers au moins le premier moyen d'injection (50), ladite quantité d'air rejetée étant issue de la réaction d'oxydation dudit combustible réducteur, le premier moyen d'injection (50) étant agencé pour injecter ladite première quantité d'air le long d'une surface (22) de la coque (20) destinée à être immergée.

2. Dispositif (40) selon la revendication précédente **caractérisé en ce que** le premier moyen d'injection (50) comporte un élément d'étanchéité pour limiter ou empêcher la remontée d'une quantité d'eau vers le moyen d'acheminement (42).

3. Dispositif (40) selon l'une quelconque des revendications précédentes **caractérisé en ce que** la première quantité d'air est injectée par les moyens d'injection (50) sous forme de bulles d'air, lesdites bulles d'air ayant de préférence un diamètre inférieur à 5 millimètres.

4. Dispositif (40) selon l'une quelconque des revendications précédentes **caractérisé en ce que** la coque (20) comporte une aile d'eau (60) destinée à être immergée et **en ce que** ladite aile d'eau (60) comporte au moins un second moyen d'injection (50) agencé pour injecter au moins une portion de la première quantité d'air.

5. Dispositif (40) selon la revendication précédente **caractérisé en ce que** le second moyen d'injection (50) de l'aile d'eau (60) est agencé pour injecter la portion de la première quantité d'air le long d'une surface verticale de l'aile d'eau (60).

6. Dispositif (40) selon l'une quelconque des revendications précédentes **caractérisé en ce que** la coque (20) comporte une portion additionnelle formant un décrochement en amont du premier moyen d'injection (50), relativement au sens de déplacement du navire (10).

7. Dispositif (40) selon l'une quelconque des revendications précédentes **caractérisé en ce qu'**il comporte un dispositif de contrôle commande du débit d'air dans le moyen d'acheminement (42).

8. Dispositif (40) selon l'une quelconque des revendications précédentes **caractérisé en ce que** le moyen d'acheminement (42) comporte au moins un capteur de débit d'air (46).

9. Dispositif (40) selon l'une quelconque des revendications précédentes **caractérisé en ce qu'**il comprend un moyen de récupération (43) d'une seconde quantité d'air issue du vent apparent du navire (10), ledit moyen de récupération (43) étant apte à acheminer la seconde quantité d'air vers le moyen d'acheminement (42).

10. Procédé de réduction de la trainée hydrodynamique d'un navire (10) comportant les étapes de :
▪ Acheminement d'une première quantité d'air rejetée par une pile à combustible (30) par un moyen d'acheminement (42) vers un moyen d'injection (50) compris par une coque (20), ladite pile à combustible (30) étant apte à générer une tension électrique grâce à l'oxydation d'un combustible réducteur couplée à la réduction sur une autre électrode d'un oxydant, et ladite quantité d'air rejetée étant issue de la réaction d'oxydation dudit combustible réducteur ;
▪ Injection de la première quantité d'air par le moyen d'injection (50) le long d'une surface (22) de la coque (20) destinée à être immergée.

## Patentansprüche

1. Vorrichtung zur Verringerung des hydrodynamischen Widerstand (40) eines Schiffes (10), umfassend:
▪ eine Schale (20), die mindestens ein erstes Mittel (50) zur Injektion eines Fluids umfasst;
▪ eine Brennstoffzelle (30), die in der Lage ist, durch die Oxidation eines mit der Reduktion an der anderen Elektrode eines Oxidationsmittels gekoppelten reduzierenden Brennstoffs eine elektrische Spannung zu erzeugen, und
▪ ein Fördermittel (42) für eine erste Luftmenge, die von der Brennstoffzelle (30) in das mindestens erste Einspritzmittel (50) abgegeben wird, wobei sich die abgegebene Luftmenge aus der Oxidationsreaktion des reduzierenden Brennstoffs ergibt, wobei das erste Einspritzmittel (50) so angeordnet ist, dass diese erste Luftmenge entlang einer Oberfläche (22) des Rumpfes (20), der zum Eintauchen bestimmt ist, eingespritzt wird.

2. Vorrichtung (40) nach dem vorhergehenden Anspruch, **dadurch gekennzeichnet, dass** das erste Injektionsmittel (50) ein Dichtungselement umfasst, um das Aufsteigen einer Wassermenge in das Fördermittel (42) zu begrenzen oder zu verhindern.

3. Vorrichtung (40) nach einem der vorhergehenden Ansprüche, **dadurch gekennzeichnet, dass** die erste Luftmenge durch die Injektionsmittel (50) in Form von Luftblasen eingespritzt wird, wobei die Luftblasen vorzugsweise einen Durchmesser von weniger als 5 Millimetern aufweisen.

4. Vorrichtung (40) nach einem der vorhergehenden Ansprüche, **dadurch gekennzeichnet, dass** die Schale (20) einen Wasserflügel (60) aufweist, der zum Eintauchen bestimmt ist, und dass der Wasserflügel (60) mindestens ein zweites Injektionsmittel (50) aufweist, das so angeordnet ist, dass es mindestens einen Teil der ersten Luftmenge injiziert.

5. Vorrichtung (40) nach dem vorhergehenden Anspruch, **dadurch gekennzeichnet, dass** das zweite Injektionsmittel (50) des Wasserflügels (60) so angeordnet ist, dass es den Teil der ersten Luftmenge entlang einer vertikalen Oberfläche des Wasserflügels (60) injiziert.

6. Vorrichtung (40) nach einem der vorhergehenden Ansprüche, **dadurch gekennzeichnet, dass** die Schale (20) einen zusätzlichen Abschnitt aufweist, der eine Ablösung vor dem ersten Injektionsmittel (50) in Bezug auf die Bewegungsrichtung des Schiffes (10) bildet.

7. Vorrichtung (40) nach einem der vorhergehenden Ansprüche, **dadurch gekennzeichnet, dass** sie eine Vorrichtung zur Überwachung und Steuerung des Luftstroms im Fördermittel (42) umfasst.

8. Vorrichtung (40) nach einem der vorhergehenden Ansprüche, **dadurch gekennzeichnet, dass** das Fördermittel (42) mindestens einen Luftstromsensor (46) aufweist.

9. Vorrichtung (40) nach einem der vorhergehenden Ansprüche, **dadurch gekennzeichnet, dass** sie ein Mittel (43) zur Rückgewinnung einer zweiten Luftmenge aus dem scheinbaren Wind des Schiffes (10) umfasst, wobei das Rückgewinnungsmittel (43) in der Lage ist, die zweite Luftmenge zum Fördermittel (42) zu leiten.

10. Verfahren zur Reduzierung des hydrodynamischen Widerstands eines Schiffes (10), das folgende Schritte umfasst:
▪ Befördern einer ersten von einer Brennstoffzelle (30) ausgestoßenen Luftmenge durch ein Fördermittel (42) zu einem Injektionsmittel (50), das von einer Schale (20) umgeben ist;
▪ Injektion der ersten Luftmenge durch das Injektionsmittel (50) entlang einer Fläche (22) der Schale (20), die zum Eintauchen bestimmt ist.

## Claims

1. A device for reducing hydrodynamic drag (40) of a vessel (10) including:
▪ a hull (20) comprising at least one first means of injection (50) of a fluid;
▪ a fuel cell (30) capable of generating an electrical voltage through the oxidation of a reducing fuel coupled to the reduction on the other electrode of an oxidant and
▪ a means of conveyance (42) of a first amount of air discharged by the fuel cell (30) to at least the first means of injection (50), the said amount of air discharged resulting from the oxidation reaction of the said reducing fuel, the first means of injection (50) being arranged to inject said first amount of air along a surface (22) of the hull (20) intended to be immersed.

2. The device (40) according to the preceding claim **characterized in that** the first means of injection (50) comprises a sealing element to limit or prevent the rise of an amount of water to the means of conveyance (42).

3. The device (40) according to any one of the preceding claims **characterized in that** the first amount of air is injected by the means of injection (50) in the form of air bubbles, said air bubbles preferably having a diameter of less than 5 millimeters.

4. The device (40) according to any one of the preceding claims **characterized in that** the hull (20) comprises a water wing (60) intended to be immersed and **in that** said water wing (60) comprises at least one second means of injection (50) arranged to inject at least a portion of the first amount of air.

5. The device (40) according to the preceding claim **characterized in that** the second means of injection (50) of the water wing (60) is arranged to inject the portion of the first amount of air along a vertical surface of the water wing (60).

6. The device (40) according to any one of the preceding claims **characterized in that** the hull (20) comprises an additional portion forming a setback upstream of the first means of injection (50), relative to the direction of movement of the vessel (10).

7. The device (40) according to any one of the preceding claims **characterized in that** it comprises a command-control device for the air flow in the means of conveyance (42).

8. The device (40) according to any one of the preceding claims **characterized in that** the means of conveyance (42) comprises at least one air flow sensor (46).

9. The device (40) according to any one of the preceding claims **characterized in that** it comprises a means of recovery (43) of a second amount of air from the apparent wind of the vessel (10), said means of recovery (43) being capable of conveying the second amount of air to the means of conveyance (42).

10. A method for reducing the hydrodynamic drag of a vessel (10) including the steps of:
▪ Conveying a first amount of air discharged by a fuel cell (30) by a means of conveyance (42) to a means of injection (50) comprised by a hull (20);
▪ Injecting the first amount of air by the means of injection (50) along a surface (22) of the hull (20) intended to be immersed.
